Europäisches Patentamt

European Patent Office

Office européen des brevets

(19)

(11) Publication number : **0 576 154 A1**

(12) **EUROPEAN PATENT APPLICATION**

(21) Application number : 93304110.5

(22) Date of filing : 26.05.93

(51) Int. Cl.⁵ : **G06F 7/52**

(30) Priority : 26.05.92 KR 895092

(43) Date of publication of application :
29.12.93 Bulletin 93/52

(84) Designated Contracting States :
**DE FR GB IT**

(71) Applicant : **SAMSUNG ELECTRONICS CO.,
LTD.
416 Maetan-3 Dong, Paldal-ku
Suwon-city, Kyungki-do 441-373 (KR)**

(72) Inventor : **Park, Min-Cheol
5-412, Sinjin Apt., 140-2, Zakjeon-dong
Buk-ku Incheon (KR)**
Inventor : **Lee, Bang-Won
1305-1105, Joogong Apt., 241, Chulsan 3-dong
Kwangmyeong-city, Kyungki-do (KR)**
Inventor : **Kim, Kwang-moon
1-106, Samshin Apt., 213-20, Jeungsan-dong
Eunpyeong-ku, Seoul (KR)**
Inventor : **Kim, Dong-hoe
177-1, Wonmi 1-dong
Bucheon-city, Kyungki-do (KR)**

(74) Representative : **Stanley, David William et al
APPLEYARD LEES 15 Clare Road
Halifax West Yorkshire HX1 2HY (GB)**

(54) **Multiplication method and circuit.**

(57) An nxn bit multiplication circuit comprises a partial product operation means (11-15) for dividing multiplicand data into an upper part and a lower part, respectively, and performing a partial product operation of the respective upper part and lower part using a modified Booth's algorithm, an adding means (16) for summing the partial product results of the partial product operation process, respectively, and a secondary adding means (17) for receiving summed results with respect to the upper part and the lower part, and totalling the received summed results, thereby reducing the manipulation time of the multiplication operation.

FIG. 7

EP 0 576 154 A1

The present invention relates to multiplication methods and circuits.

Generally, a multiplier may be classified as a serial multiplier, a serial-to-parallel multiplier and a parallel multiplier, according to the input method of the multiplicand and multiplier. Among these, since the parallel multiplier is the fastest, it is chiefly used in fields where large-scale information processing is required, as in digital signal processing and in video processing for high-definition televisions.

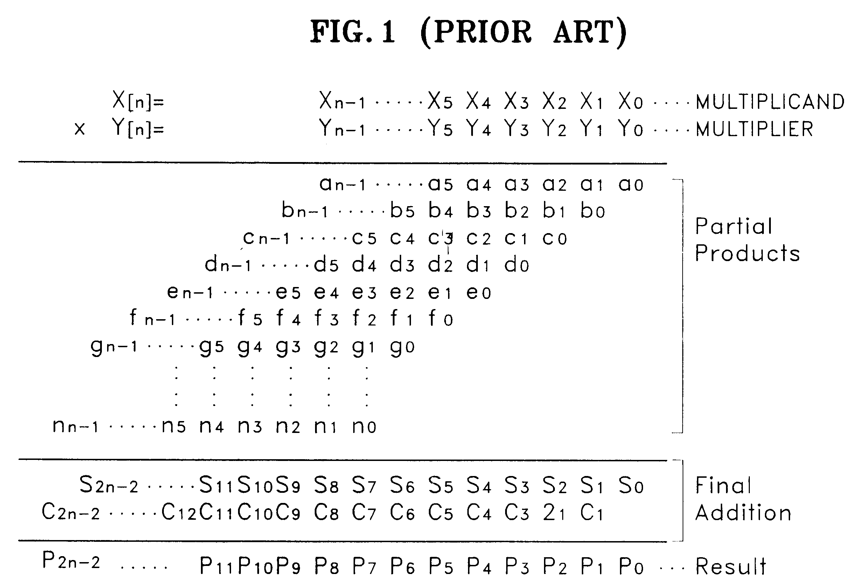

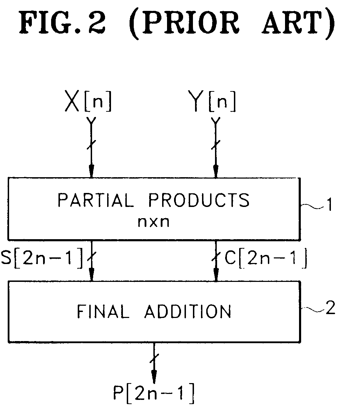

Some conventional methods and circuits will now be described with reference to Figures 1 and 2 of the accompanying diagrammatic drawings, in which:

Figure 1 mathematically shows a general multiplication method; and

Figure 2 is a block diagram of a multiplication circuit for performing a multiplication of the equation shown in Figure 1.

Figure 1 mathematically shows a general multiplication method. In Figure 1, first of all, the general multiplication method comprises a partial product operation process in which an $n$-bit multiplicand $X(n)$ is multiplied by an $n$-bit multiplier $Y(n)$, to generate partial products of a, b, c..., $n$ each composed of $n$ bits, an addition process in which the results of the partial products are totalled to obtain a sum and a carry, and a result operation process in which the results of the addition process are combined to obtain a result P. In Figure 1, reference symbols a, b, c..., $n$ represent the partial products of $X(n)$ and $Y(n)$, while S and C represent respectively a sum and a carry which occur by summing the partial products of the corresponding ciphers. These values are operated in the addition process to output the final multiplication result P.

Figure 2 is a block diagram of a multiplication circuit for performing a multiplication of the equation shown in Figure 1. In Figure 2, the multiplication circuit comprises a partial product circuit 1 for performing an operation of the partial products of $n$-bit multiplier $Y(n)$ with $n$-bit multiplicand $X(n)$, and an addition circuit 2 for summing the signals output from partial product circuit 1 to output a result.

The addition process can be performed by a carry propagation adder, a carry look-ahead adder, a transmission-gate conditional sum adder, or a binary look-ahead adder.

The partial product circuit for performing the partial product can be realized by an array structure in which a full adder is embodied in a regular two-dimensional array, or a Wallace tree structure using a carry-save adder. The array structure has advantages over the Wallace tree structure in view of its smaller chip area and layout regularity, but has a slower multiplication time than that of the Wallace tree structure.

Preferred embodiments of the present invention aim to provide a multiplication method capable of reducing the time necessary for performing a partial product operation in a multiplication process.

It is another aim to provide a multiplication circuit for performing such a method.

According to one aspect of the present invention, there is provided a multiplication circuit comprising:

partial product operation means for dividing $n \times n$ bit data into an upper bit and a lower bit respectively and performing a partial product operation of the respective upper bit and lower bit using a modified Booth's algorithm;

adding means for summing the partial product results of the partial product operation process, respectively; and

secondary adding means for receiving summed results with respect to the respective upper bit and lower bit, and totalling the received summed results.

Preferably, said partial product operation means comprises:

a first register for storing a first data bit in response to a clock;

a second register for storing a second data bit in response to said clock;

a modified Booth's decoder for decoding by a modified Booth's decoding method, in response to a respective clock, said second data output from said second register;

upper-bit adder means for summing said first data and upper bits of said modified Booth's decoder; and

lower-bit adder means for summing said first data and lower bits of said modified Booth's decoder.

A multiplication circuit as above may further comprise adder means of a Wallace tree structure for summing the resulting data of said upper-bit adder means and said lower-bit adder means.

According to another aspect of the present invention, there is provided a multiplication method comprising:

a partial product operation process for dividing $n \times n$ data into an upper bit and a lower bit, respectively, and performing a partial product operation of the respective upper bit and lower bit using a modified Booth's algorithm;

an adding process for summing the partial product results of the partial product operation process, respectively; and

a secondary adding process for receiving summed results with respect to the upper bit and the lower bit, and totalling the received summed results.

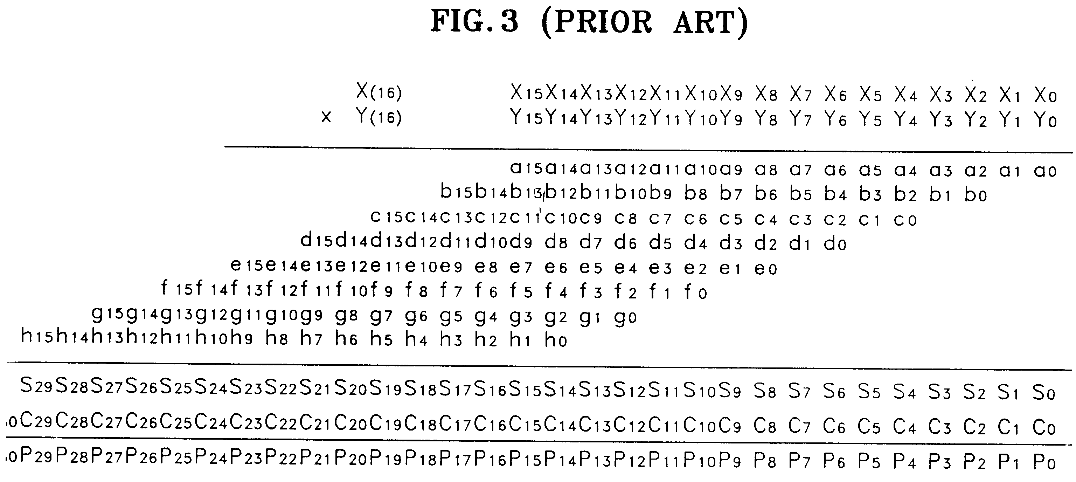

For a better understanding of the invention, and to show how the same may be carried into effect, reference will now be made, by way of example, to Figures 3 to 8 of the accompanying diagrammatic drawings, in which:

Figure 3 mathematically shows a conventional multiplication method using a modified Booth's algorithm;

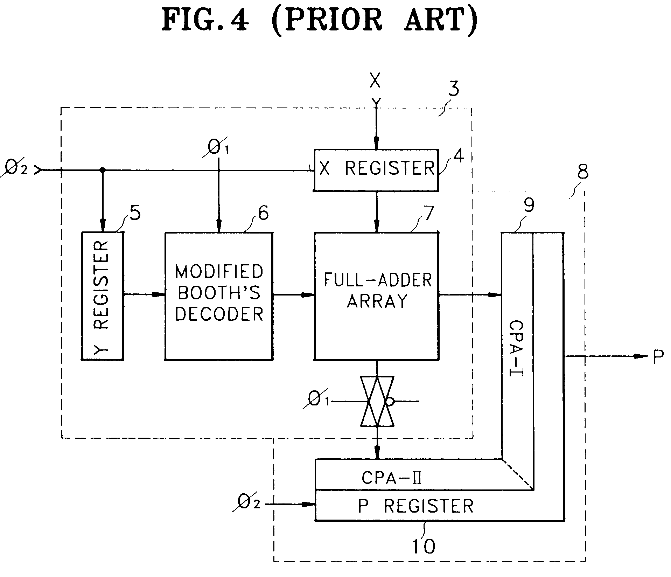

Figure 4 is a block diagram of a conventional multiplication circuit using a modified Booth's algorithm;

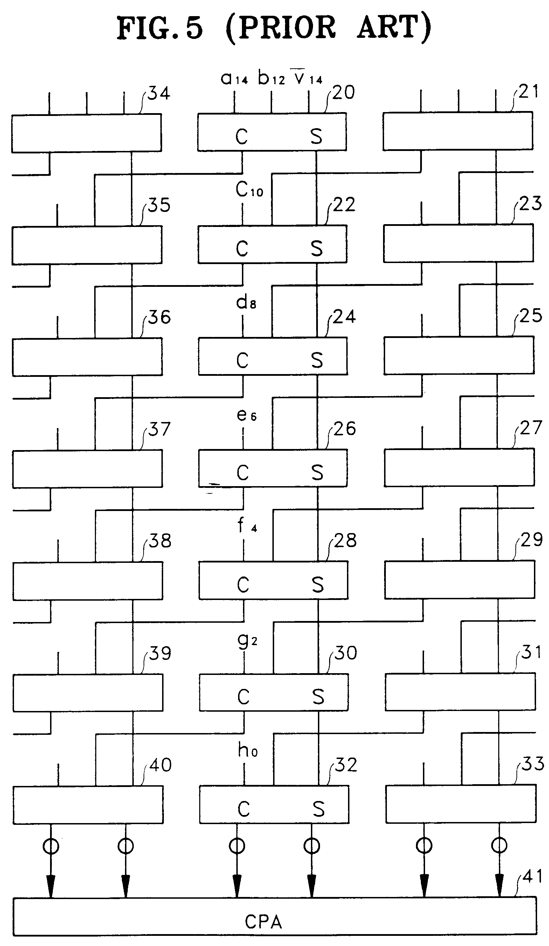

Figure 5 is a detailed circuit diagram of a part of a full-adder array circuit shown in Figure 4;

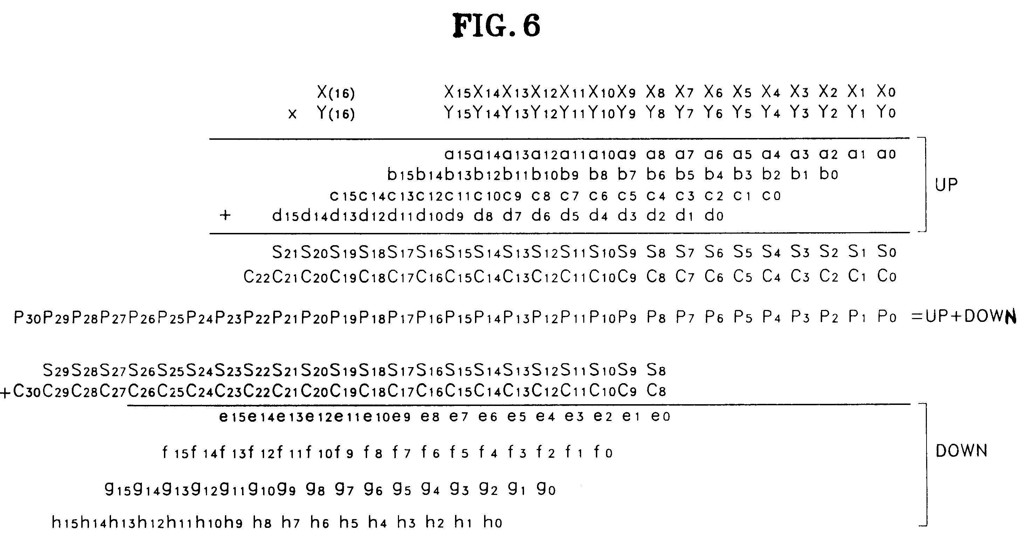

Figure 6 mathematically shows one example of a multiplication method for one embodiment of the present invention;

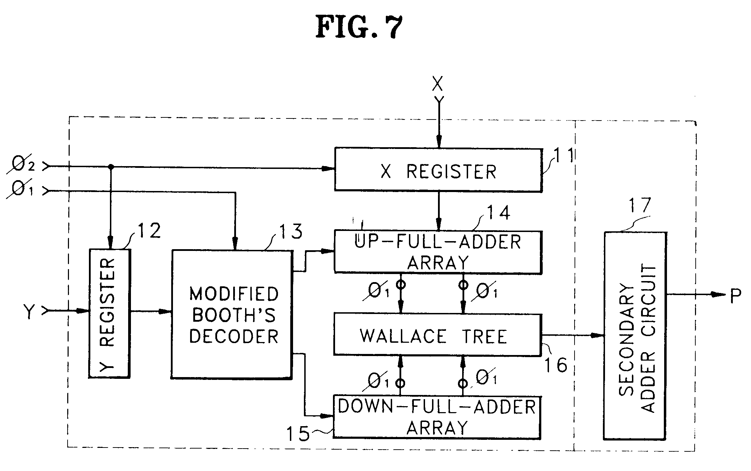

Figure 7 is a block diagram of a multiplication circuit for performing the algorithm of Figure 6; and

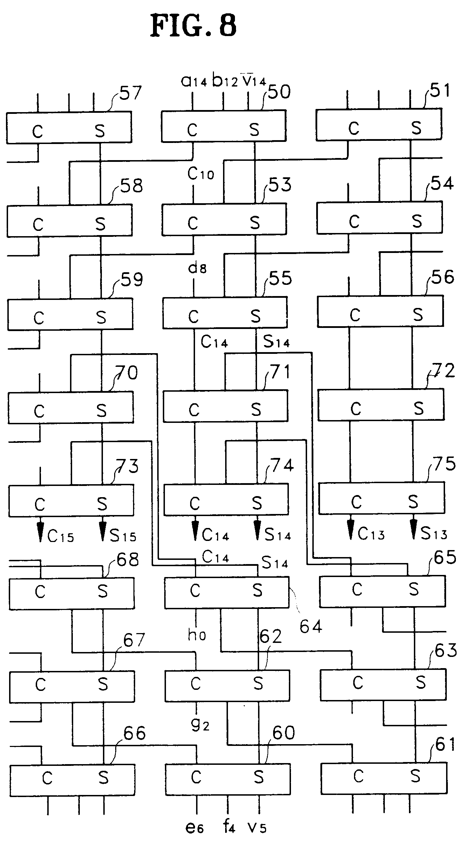

Figure 8 is a detailed circuit diagram of parts of an up-full-adder array circuit and a down-full-adder array circuit.

In the figures, like reference numerals denote like or corresponding parts.

Prior to explaining a multiplication method and circuit according to an embodiment of the present invention, a conventional multiplication method and circuit will be described below, with reference to the accompanying drawings.

In Figure 3, which mathematically shows a conventional multiplication method using a modified Booth's algorithm, when a 16-bit multiplicand X(16) is multiplied by a 16-bit multiplier Y(16), using a modified Booth's algorithm, the multiplicand X(16) is multiplied by every two-bit multiplier Y(16) in a first step, to obtain partial product results ($a_{15}$-$a_0$, $b_{15}$-$b_0$, $c_{15}$-$c_0$, $d_{15}$-$d_0$, $e_{15}$-$e_0$, $f_{15}$-$f_0$, $g_{15}$-$g_0$, $h_{15}$-$h_0$). In a second step, the partial product results obtained in the first step are summed to obtain sums ($S_{29}$-$S_0$) and carries ($C_{30}$-$C_0$). In a third step, the sums ($S_{29}$-$S_0$) and carries ($C_{30}$-$C_0$) are combined to obtain final results ($P_{30}$-$P_0$).

Figure 4 shows a conventional multiplication circuit using a modified Booth's algorithm. In Figure 4, the conventional multiplication circuit comprises an X-register 4 for storing multiplicand $X(n)$ and a Y-register 5 for storing multiplier $Y(n)$ in response to a second clock $\phi_2$, a modified Booth's decoder 6 for decoding the multiplier $Y(n)$ by a modified Booth's algorithm in response to a first clock $\phi_1$, a full-adder array circuit 7 which receives signals decoded by modified Booth's decoder 6 and shifts multiplicand $X(n)$ by a predetermined number of bits, to perform a partial product operation, and a secondary adder circuit 9 which receives partial product results of full-adder array circuit 7 and utilizes carry propagation adders, to obtain the total of the partial product results.

For example, when the multiplier and the multiplicand are both 16 bits, a multiplication delay of fifteen levels occurs during the operation of the partial products. Therefore, to perform a multiplication operation quickly, it is most effective to reduce the number of the partial products. As one method of performing the above, an earlier modified Booth's algorithm encodes the multipliers as {-2, -1, 0, +1, +2} by binding every bundle of three bits, to halve the number of partial products, thereby reducing the multiplication delay level to $n/2$-1 so as to perform a fast multiplication operation. Here, assuming that Y is a coefficient of the $n$-bit multiplier, y" is defined by the equation (3) below, P is a multiplied result value wherein $n$ is a natural number and i is an odd natural number, the following equations are satisfied.

$$Y = \sum_{i=1}^{n} \left( y_i^{''} \times 2^{i-1} \right)$$

$$\cdots \cdots \cdots \cdots \cdots \cdots \cdots \cdots \cdots \cdots \cdots \cdots \quad (1)$$

$$\begin{aligned} P &= XY \\ &= \sum_{i=1}^{n} \left( y_i^{''} \times 2^{i-1} \right) X \end{aligned}$$

$$\cdots \cdots \cdots \cdots \cdots \cdots \cdots \cdots \cdots \cdots \cdots \cdots \quad (2)$$

Here, the function y" is an element of the set {-2, -1, 0, +1, +2} and satisfies the following equation.

$$y'' = y_{i-1} + y_i - 2y_{i+1} \quad (3)$$

The following Table I represents the output of a general modified Booth's encoder, in which +2X and -2X represent two times +1X and -1X, respectively, and -1X and -2X represent the complements of +1X and +2X, respectively.

**Table I**

| $Y_{i+1}$ | $Y_i$ | $Y_{i-1}$ | symbol | operation |
|---|---|---|---|---|
| 0 | 0 | 0 | 0 | add zero |
| 0 | 0 | 1 | +1 | add +1X |
| 0 | 1 | 0 | +1 | add +1X |
| 0 | 1 | 1 | +2 | add +2X |
| 1 | 0 | 0 | -2 | add -2X |
| 1 | 0 | 1 | -1 | add -1X |
| 1 | 1 | 0 | -1 | add -1X |
| 1 | 1 | 1 | 0 | add zero |

Figure 5 is a detailed circuit diagram of a part of the full-adder array circuit 7 shown in Figure 4. In Figure 5, the full-adder array circuit comprises a full-adder 20 which receives partial product results (for example, $a_{14}$ and $b_{12}$) and sums them, a full-adder 22 which receives the sum output of full-adder 20, the carry output of a full-adder 21 and a partial product result $c_{10}$, and adds up all the received signals, a full-adder 24 which receives the sum output of full-adder 22, the carry output of a full-adder 23 and a partial product result $d_8$, and adds up all the received signals, a full-adder 26 which receives the sum output of full-adder 24, the carry output of a full-adder 25 and a partial product result $e_6$, and adds up all the received signals, a full-adder 28 which receives the sum output of full-adder 26, the carry output of a full-adder 27 and a partial product result $f_4$, and adds up all the received signals, a full-adder 30 which receives the sum output of full-adder 28, the carry output of a full-adder 29 and a partial product result $g_2$, and adds up all the received signals, a full-adder 32 which receives the sum output of full-adder 30, the carry output of a full-adder 31 and a partial product result $h_0$, and adds up all the received signals, and a carry propagation full-adder (CPA) 41 which receives the results of full-adder 32 and sums the received signals, and full-adders 33-40.

Figure 6 mathematically shows one example of a multiplication method according to one embodiment of the present invention. In Figure 6, 16-bit multiplicand X(16) and 16-bit multiplier Y(16) are divided into upper bits and lower bits, respectively. to perform a multiplication in a first step. In this step, using a modified Booth's algorithm, the multiplicand X(16) is multiplied by the multiplier Y(16) by every two bits, to obtain the partial product results $a_{15}$-$a_0$, $b_{15}$-$b_0$, $c_{15}$-$c_0$ and $d_{15}$-$d_0$ according to the upper bits and, according to the lower bits, obtains the partial product results $e_{15}$-$e_0$, $f_{15}$-$f_0$, $g_{15}$-$g_0$ and $h_{15}$-$h_0$. In a second step, the partial product results $a_{15}$-$a_0$, $b_{15}$-$b_0$, $c_{15}$-$c_0$ and $d_{15}$-$d_0$ obtained in the first step are summed to obtain the sums $S_{21}$-$S_0$ and the carries $C_{22}$-$C_0$, and also the above partial product results $e_{15}$-$e_0$, $f_{15}$-$f_0$, $g_{15}$-$g_0$ and $h1_5$-$h_0$ are summed to obtain the sums $S_{29}$-$S_8$ and the carries $C_{30}$-$C_8$. In a third step, the above sums $S_{21}$-$S_0$ and the carries $C_{22}$-$C_0$ according to the calculation of the upper bits and the sums $S_{29}$-$S_8$ and the carries $C_{30}$-$C_8$ according to the calculation of the lower bits. are totalled to obtain the final results $P_{30}$-$P_0$.

Figure 7 is a block diagram of a multiplier for performing the above algorithm. In Figure 7. the multiplication circuit comprises an X-register 11 and a Y-register 12 for storing multiplicand $X(n)$ and multiplier Y(n), respectively, in response to a second clock $ø_2$, a modified Booth's decoder 13 for decoding the output of Y-register 12 by a modified Booth's algorithm in response to a first clock $ø_1$, an up-full-adder array circuit 14 for summing the upper bits of the signals from modified Booth's decoder 13, a down-full-adder array circuit 15 for summing the lower bits of the signals output from modified Booth's decoder 13, a Wallace tree adder circuit 16 for summing the signals output from up-full-adder 14 and down-full-adder 15 and a secondary adder circuit 17 which combines the sums and carries generated in Wallace tree adder circuit 16 to output final results.

Figure 8 is a detailed circuit diagram of a part of the up-full-adder array circuit and the down-full-adder array circuit shown in Figure 7. In Figure 8, a part of the up-full-adder array circuit comprises a full-adder 50 for summing the multiplication results $a_{14}$ and $b_{12}$ of multiplicand $X(n)$, a full-adder 53 for combining the sum of full-adder 50, a carry of a full-adder 51 and a partial product result $c_{10}$, a full-adder 55 for combining the sum of full-adder 53, a carry of a full-adder 54 and a partial product result $d_8$, and full-adders 56, 57, 58 and 59 for performing the same operation as those of the above full-adders 50, 53 and 55, and the down-full-adder array circuit comprises a full-adder 60 for summing the partial product results $e_6$ and $f_4$, a full-adder 62 for combining the sum of full-adder 60, a carry of a full-adder 61 and a partial product result $g_2$, a full-adder 64 for combining the sum of full-adder 62, a carry of a full-adder 63 and a partial product result $h_0$, and full-adders 65, 66, 67 and 68 for performing the same operation as those of the above full-adders 60, 62 and 64.

The Wallace tree adder circuit comprises full-adders 70-75 for performing an addition operation to the outputs of the above full-adders 55, 56, 59, 64, 65 and 68. The sums and the carries of the above full-adders 73-75 are combined in the secondary adder circuit 17.

Thus, the multiplication circuit according to the illustrated embodiment of the present invention mixes an array structure and a Wallace tree structure, and reduces the steps of performing multiplication, when compared with a conventional multiplication circuit.

The following Table II compares the operation levels of the multiplication circuit of the illustrated embodiment of the present invention with those of a conventional multiplication circuit.

**Table II**

| operand width (bits) | partial product multiplication | |
|---|---|---|
| | prior art | embodiment of the invention |
| 16 | 7 | 5 |
| 24 | 11 | 7 |
| 32 | 15 | 9 |
| 64 | 31 | 17 |
| n | $n/2-1$ | $n/4+1$ |

In the above Table II, the multiplication delay level of the conventional circuit is $n/2-1$, while that of the illustrated embodiment of the present invention is $n/4+1$. Thus, it can be seen that, when the prior art is compared with the illustrated embodiment of the present invention, as the number of bits necessary for its operation increases, the multiplication delay level decreases. Therefore, the illustrated embodiment of the present invention can perform the multiplication faster than that of the conventional circuit.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A multiplication circuit comprising:
   partial product operation means (11-15) for dividing $n \times n$ bit data into an upper bit and a lower bit respectively and performing a partial product operation of the respective upper bit and lower bit using a modified Booth's algorithm;
   adding means (16) for summing the partial product results of the partial product operation process, respectively; and
   secondary adding means (17) for receiving summed results with respect to the respective upper bit and lower bit, and totalling the received summed results.

2. A multiplication circuit according to claim 1, wherein said partial product operation means (11-15) comprises:

a first register (11) for storing a first data bit in response to a clock;

a second register (12) for storing a second data bit in response to said clock;

a modified Booth's decoder (13) for decoding by a modified Booth's decoding method, in response to a respective clock, said second data output from said second register;

upper-bit adder means (14) for summing said first data and upper bits of said modified Booth's decoder; and

lower-bit adder means (15) for summing said first data and lower bits of said modified Booth's decoder.

3. A multiplication circuit according to claim 2, further comprising adder means (16) of a Wallace tree structure for summing the resulting data of said upper-bit adder means (14) and said lower-bit adder means (15).

4. A multiplication method comprising:

a partial product operation process for dividing $n \times n$ data into an upper bit and a lower bit, respectively, and performing a partial product operation of the respective upper bit and lower bit using a modified Booth's algorithm;

an adding process for summing the partial product results of the partial product operation process, respectively; and

a secondary adding process for receiving summed results with respect to the upper bit and the lower bit, and totalling the received summed results.

# FIG. 1 (PRIOR ART)

$$X[n]= \qquad\qquad X_{n-1} \cdots\cdots X_5\ X_4\ X_3\ X_2\ X_1\ X_0 \cdots\cdots \text{MULTIPLICAND}$$
$$\times\ \ Y[n]= \qquad\qquad Y_{n-1} \cdots\cdots Y_5\ Y_4\ Y_3\ Y_2\ Y_1\ Y_0 \cdots\cdots \text{MULTIPLIER}$$

$$a_{n-1} \cdots\cdots a_5\ a_4\ a_3\ a_2\ a_1\ a_0$$
$$b_{n-1} \cdots\cdots b_5\ b_4\ b_3\ b_2\ b_1\ b_0$$
$$c_{n-1} \cdots\cdots c_5\ c_4\ c_3\ c_2\ c_1\ c_0$$
$$d_{n-1} \cdots\cdots d_5\ d_4\ d_3\ d_2\ d_1\ d_0$$
$$e_{n-1} \cdots\cdots e_5\ e_4\ e_3\ e_2\ e_1\ e_0$$
$$f_{n-1} \cdots\cdots f_5\ f_4\ f_3\ f_2\ f_1\ f_0$$
$$g_{n-1} \cdots\cdots g_5\ g_4\ g_3\ g_2\ g_1\ g_0$$
$$\vdots \qquad\qquad \vdots\quad\vdots\quad\vdots\quad\vdots\quad\vdots\quad\vdots$$
$$n_{n-1} \cdots\cdots n_5\ n_4\ n_3\ n_2\ n_1\ n_0$$

Partial Products

$$S_{2n-2} \cdots\cdots S_{11}S_{10}S_9\ S_8\ S_7\ S_6\ S_5\ S_4\ S_3\ S_2\ S_1\ S_0$$
$$C_{2n-2} \cdots\cdots C_{12}C_{11}C_{10}C_9\ C_8\ C_7\ C_6\ C_5\ C_4\ C_3\ 2_1\ C_1$$

Final Addition

$$P_{2n-2} \cdots\cdots\ \ P_{11}P_{10}P_9\ P_8\ P_7\ P_6\ P_5\ P_4\ P_3\ P_2\ P_1\ P_0 \cdots \text{Result}$$

EP 0 576 154 A1

# FIG.2 (PRIOR ART)

EP 0 576 154 A1

# FIG.3 (PRIOR ART)

$$X_{(16)}$$
$$x \quad Y_{(16)}$$

$X_{15}X_{14}X_{13}X_{12}X_{11}X_{10}X_9 \ X_8 \ X_7 \ X_6 \ X_5 \ X_4 \ X_3 \ X_2 \ X_1 \ X_0$
$Y_{15}Y_{14}Y_{13}Y_{12}Y_{11}Y_{10}Y_9 \ Y_8 \ Y_7 \ Y_6 \ Y_5 \ Y_4 \ Y_3 \ Y_2 \ Y_1 \ Y_0$

$a_{15}a_{14}a_{13}a_{12}a_{11}a_{10}a_9 \ a_8 \ a_7 \ a_6 \ a_5 \ a_4 \ a_3 \ a_2 \ a_1 \ a_0$
$b_{15}b_{14}b_{13}b_{12}b_{11}b_{10}b_9 \ b_8 \ b_7 \ b_6 \ b_5 \ b_4 \ b_3 \ b_2 \ b_1 \ b_0$
$c_{15}c_{14}c_{13}c_{12}c_{11}c_{10}c_9 \ c_8 \ c_7 \ c_6 \ c_5 \ c_4 \ c_3 \ c_2 \ c_1 \ c_0$
$d_{15}d_{14}d_{13}d_{12}d_{11}d_{10}d_9 \ d_8 \ d_7 \ d_6 \ d_5 \ d_4 \ d_3 \ d_2 \ d_1 \ d_0$
$e_{15}e_{14}e_{13}e_{12}e_{11}e_{10}e_9 \ e_8 \ e_7 \ e_6 \ e_5 \ e_4 \ e_3 \ e_2 \ e_1 \ e_0$
$f_{15}f_{14}f_{13}f_{12}f_{11}f_{10}f_9 \ f_8 \ f_7 \ f_6 \ f_5 \ f_4 \ f_3 \ f_2 \ f_1 \ f_0$
$g_{15}g_{14}g_{13}g_{12}g_{11}g_{10}g_9 \ g_8 \ g_7 \ g_6 \ g_5 \ g_4 \ g_3 \ g_2 \ g_1 \ g_0$
$h_{15}h_{14}h_{13}h_{12}h_{11}h_{10}h_9 \ h_8 \ h_7 \ h_6 \ h_5 \ h_4 \ h_3 \ h_2 \ h_1 \ h_0$

$S_{29}S_{28}S_{27}S_{26}S_{25}S_{24}S_{23}S_{22}S_{21}S_{20}S_{19}S_{18}S_{17}S_{16}S_{15}S_{14}S_{13}S_{12}S_{11}S_{10}S_9 \ S_8 \ S_7 \ S_6 \ S_5 \ S_4 \ S_3 \ S_2 \ S_1 \ S_0$
$C_{29}C_{28}C_{27}C_{26}C_{25}C_{24}C_{23}C_{22}C_{21}C_{20}C_{19}C_{18}C_{17}C_{16}C_{15}C_{14}C_{13}C_{12}C_{11}C_{10}C_9 \ C_8 \ C_7 \ C_6 \ C_5 \ C_4 \ C_3 \ C_2 \ C_1 \ C_0$
$P_{29}P_{28}P_{27}P_{26}P_{25}P_{24}P_{23}P_{22}P_{21}P_{20}P_{19}P_{18}P_{17}P_{16}P_{15}P_{14}P_{13}P_{12}P_{11}P_{10}P_9 \ P_8 \ P_7 \ P_6 \ P_5 \ P_4 \ P_3 \ P_2 \ P_1 \ P_0$

EP 0 576 154 A1

# FIG. 4 (PRIOR ART)

FIG. 4 (PRIOR ART)

Block diagram containing: X REGISTER (4), Y REGISTER (5), MODIFIED BOOTH'S DECODER (6), FULL-ADDER ARRAY (7), CPA-I (9), CPA-II, P REGISTER (10), with inputs $X$, $Y$, $\emptyset_1$, $\emptyset_2$ and output $P$. Reference numerals 3, 8.

# FIG. 5 (PRIOR ART)

EP 0 576 154 A1

# FIG. 6

$X(16)$    $X_{15}X_{14}X_{13}X_{12}X_{11}X_{10}X_9\ X_8\ X_7\ X_6\ X_5\ X_4\ X_3\ X_2\ X_1\ X_0$

$\times\ Y(16)$    $Y_{15}Y_{14}Y_{13}Y_{12}Y_{11}Y_{10}Y_9\ Y_8\ Y_7\ Y_6\ Y_5\ Y_4\ Y_3\ Y_2\ Y_1\ Y_0$

$\left.\begin{array}{l} a_{15}a_{14}a_{13}a_{12}a_{11}a_{10}a_9\ a_8\ a_7\ a_6\ a_5\ a_4\ a_3\ a_2\ a_1\ a_0 \\ b_{15}b_{14}b_{13}b_{12}b_{11}b_{10}b_9\ b_8\ b_7\ b_6\ b_5\ b_4\ b_3\ b_2\ b_1\ b_0 \\ c_{15}c_{14}c_{13}c_{12}c_{11}c_{10}c_9\ c_8\ c_7\ c_6\ c_5\ c_4\ c_3\ c_2\ c_1\ c_0 \\ +\ d_{15}d_{14}d_{13}d_{12}d_{11}d_{10}d_9\ d_8\ d_7\ d_6\ d_5\ d_4\ d_3\ d_2\ d_1\ d_0 \end{array}\right\}$ UP

$S_{21}S_{20}S_{19}S_{18}S_{17}S_{16}S_{15}S_{14}S_{13}S_{12}S_{11}S_{10}S_9\ S_8\ S_7\ S_6\ S_5\ S_4\ S_3\ S_2\ S_1\ S_0$

$C_{22}C_{21}C_{20}C_{19}C_{18}C_{17}C_{16}C_{15}C_{14}C_{13}C_{12}C_{11}C_{10}C_9\ C_8\ C_7\ C_6\ C_5\ C_4\ C_3\ C_2\ C_1\ C_0$

$P_{30}P_{29}P_{28}P_{27}P_{26}P_{25}P_{24}P_{23}P_{22}P_{21}P_{20}P_{19}P_{18}P_{17}P_{16}P_{15}P_{14}P_{13}P_{12}P_{11}P_{10}P_9\ P_8\ P_7\ P_6\ P_5\ P_4\ P_3\ P_2\ P_1\ P_0\ =\text{UP}+\text{DOWN}$

$S_{29}S_{28}S_{27}S_{26}S_{25}S_{24}S_{23}S_{22}S_{21}S_{20}S_{19}S_{18}S_{17}S_{16}S_{15}S_{14}S_{13}S_{12}S_{11}S_{10}S_9\ S_8$

$+C_{30}C_{29}C_{28}C_{27}C_{26}C_{25}C_{24}C_{23}C_{22}C_{21}C_{20}C_{19}C_{18}C_{17}C_{16}C_{15}C_{14}C_{13}C_{12}C_{11}C_{10}C_9\ C_8$

$\left.\begin{array}{l} e_{15}e_{14}e_{13}e_{12}e_{11}e_{10}e_9\ e_8\ e_7\ e_6\ e_5\ e_4\ e_3\ e_2\ e_1\ e_0 \\ f_{15}f_{14}f_{13}f_{12}f_{11}f_{10}f_9\ f_8\ f_7\ f_6\ f_5\ f_4\ f_3\ f_2\ f_1\ f_0 \\ g_{15}g_{14}g_{13}g_{12}g_{11}g_{10}g_9\ g_8\ g_7\ g_6\ g_5\ g_4\ g_3\ g_2\ g_1\ g_0 \\ h_{15}h_{14}h_{13}h_{12}h_{11}h_{10}h_9\ h_8\ h_7\ h_6\ h_5\ h_4\ h_3\ h_2\ h_1\ h_0 \end{array}\right\}$ DOWN

# FIG. 7

EP 0 576 154 A1

FIG. 8

European Patent Office

**EUROPEAN SEARCH REPORT**

Application Number

EP 93 30 4110

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 383 965 (IBM CORP.)<br>* page 2, line 22 - line 51; figures 1,4,5 * | 1-4 | G06F7/52 |
| X | EP-A-0 291 440 (UNITED TECHNOLOGIES CORP.)<br>* column 2, line 40 - column 3, line 15; figure 2 *<br>* column 3, line 15 - line 21 * | 1-4 | |
| A | PROCEEDINGS OF THE IEEE 1988 CUSTOM INTEGRATED CIRCUITS CONFERENCE, 16-19 MAY 1988, ROCHESTER, NY, USA. 1988, IEEE NEW YORK<br>W. SNYDER ET AL. 'A 100 MegaFlop Double Precision IEEE Multiplier Block For Advanced Bipolar VLSI'<br>pages 17.4.1 - 17.4.3<br>* page 2, left column, line 9 - line 32; figure 2 * | 2 | |

TECHNICAL FIELDS SEARCHED (Int. Cl.5 )

G06F

The present search report has been drawn up for all claims

| Place of search | Date of completion of the search | Examiner |
|---|---|---|
| THE HAGUE | 24 SEPTEMBER 1993 | VERHOOF P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)